# FASCICULE DE BREVET EUROPEEN

(11) **EP 0 453 339 B1**
(45) Date de publication et mention de la délivrance du brevet: **17.05.1995**
(21) Numéro de dépôt: 91400761.2
(22) Date de dépôt: 21.03.1991
(51) Int. Cl.: B65G 69/20

(54) **Dispositif d'évacuation des gaz d'un conteneur**
Vorrichtung zum Entnehmen von Gas aus einem Tankbehälter
Apparatus for the evacuation of gas from a container

(30) Priorité: 29.03.1990 FR 9004022
(43) Date de publication de la demande: 23.10.1991
(73) Titulaire: BRUN S.A., Eybens (Isere) (FR)
(72) Inventeur: Huillier, Daniel Jean-Pierre, F-38340 Voreppe (FR)
(74) Mandataire: Casalonga, Axel

(56) Documents cités:
- EP-A- 0 040 644
- US-A- 4 578 092

## Description

La présente invention concerne un dispositif d'évacuation des gaz permettant d'équiper un conteneur destiné notamment à recevoir un matériau pulvérulent à faible densité.

De plus en plus, les matériaux pulvérulents à faible densité, par exemple de la silice pyrogénée, ne sont plus transportés dans des sacs mais sont transportés dans des conteneurs tels que des citernes disposées sur camions ou trains. Il en résulte un problème de coût de transport par unité de poids du matériau transporté. Afin d'accroître le poids de matériau remplissant les conteneurs, on a déjà proposé d'évacuer l'air lors de leur remplissage. Une solution connue consiste à disposer dans la partie inférieure des conteneurs des tuyaux cylindriques à paroi perforée reliés à l'extérieur - EP-A-40 644. Dans ce *document* l'espace à remplir s'étend autour des tuyaux d'aspiration.

La surface d'aspiration est égale à la surface périphérique des tuyaux prévus.

Pour augmenter cette surface d'aspiration pour en particulier augmenter le débit d'aspiration, on doit augmenter le nombre de tuyaux ou augmenter le diamètre des tuyaux prévus. Des calculs simples de surfaces et de volumes peuvent montrer que, dans ces conditions, le volume à remplir du conteneur diminue dans des proportions importantes.

En conséquence, la surface d'aspiration est techniquement limitée sans quoi l'espace à remplir deviendrait trop petit.

Le principe de désaération du dispositif précité met obligatoirement en oeuvre une source de dépression compte tenu de la disposition des surfaces d'aspiration.

Ce dispositif connu ne peut pas être mis en oeuvre à l'occasion d'une opération de remplissage en circuit ouvert. En effet, une aspiration serait dans ce cas sans effet et donc inutile.

En outre, les tuyaux prévus dans le document précité constituent une gêne considérable notamment lors du déchargement du produit et lors du nettoyage interne du conteneur.

La présente invention a pour but de remédier notamment à cet inconvénient et propose un dispositif d'évacuation des gaz qui permet d'accroître dans des propositions importantes le poids de matériaux par unité de volume des conteneurs.

La présente invention a tout d'abord pour objet un dispositif d'évacuation des gaz permettant d'équiper un conteneur destiné notamment à recevoir un matériau pulvérulent à faible densité.

Le dispositif d'évacuation selon l'invention
- que la chambre d'évacuation est délimitée par la paroi périphérique du conteneur et une paroi de séparation qui présente une toile ou tamis
- et que la communication entre la chambre et l'extérieur se fait par une ouverture ménagée la paroi de séparation.

Son fonctionnement et ses avantages sont les suivants.

Fondamentalement, la paroi du volume à remplir constitue un tuyau à remplir, le gaz s'évacuant au travers de la paroi de ce tuyau. Ainsi, la surface d'évacuation peut s étendre à la totalité de la paroi du volume à remplir.

Que le remplissage soit effectué par écoulement naturel ou gravitaire ou sous pression, c'est le poids du produit qui, au fur et à mesure de son introduction, provoque l'évacuation du gaz et en conséquence la densification du produit dans le conteneur. Une aspiration constitue une amplification de ce phénomène dû à l'invention.

Le volume intérieur à remplir du conteneur est libre de tout obstacle, facilitant le déchargement et le nettoyage du conteneur.

Le nombre d'ouvertures dans la paroi du conteneur n'est pas limité par la structure de la paroi de séparation, plusieurs ouvertures pouvant être prévues afin de répartir l''évacuation dans le cas où le conteneur est de grande longueur.

Le volume de la chambre n'est pas directement lié à la dimension de la paroi de séparation de telle sorte qu'à une chambre de faible volume peut être associée une grande surface d'évacuation, réduisant ainsi la perte du volume à remplir du conteneur causée par le dispositif d'évacuation.

L'évacuation des gaz par la surface périphérique du volume interne à remplir du conteneur, au travers d'une toile ou tamis, produit d'excellents résultats même sans aspiration, qui sont de toute façon très largement supérieurs à ceux produits par le dispositif connu précité qui lui nécessite obligatoirement une aspiration.

La présente invention a également pour objet un conteneur destiné notamment à recevoir un matériau pulvérulent à faible densité, qui est équipé d'au moins un dispositif d'évacuation des gaz.

La présente invention sera mieux comprise à l'étude d'un conteneur équipé de dispositifs d'évacuation des gaz, décrit à titre d'exemple non limitatif et illustré par le dessin sur lequel :
- la figure 1 représente une coupe transversale d'un conteneur équipé longitudinalement de trois dispositifs d'évacuation des gaz ;
- la figure 2 représente une vue agrandie d'une partie de l'un des dispositifs d'évacuation des gaz précités ;

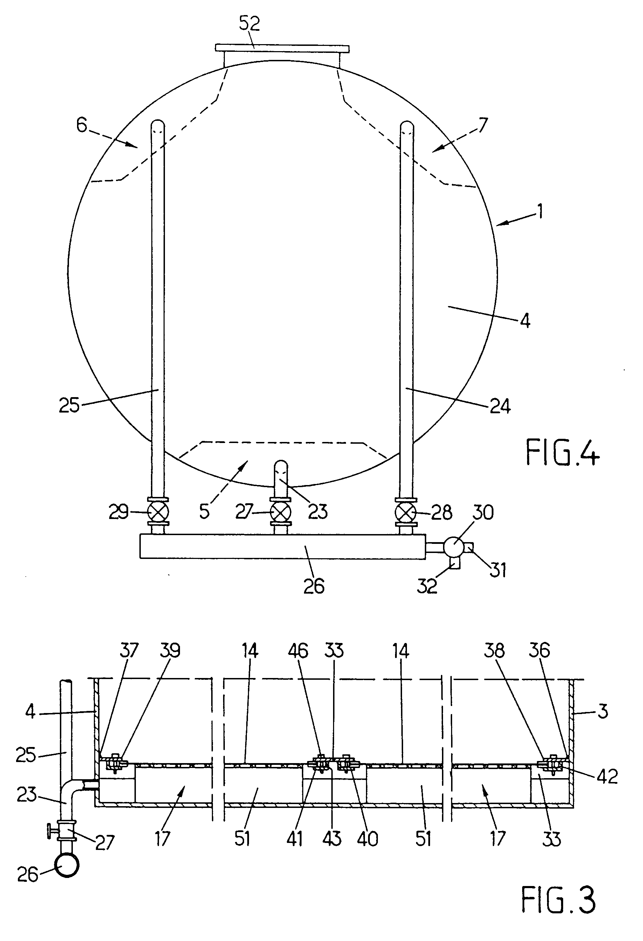

- la figure 3 représente une coupe longitudinale de la partie inférieure du conteneur représenté sur la figure 1 ;
- et la figure 4 représente une vue extérieure en bout du conteneur représenté sur la figure 1.

Le conteneur représenté sur les figures et repéré d'une manière générale par la référence 1 comprend une paroi périphérique cylindrique 2 ainsi que deux parois d'extrémité 3 et 4.

Le conteneur 1 est équipé, dans sa partie inférieure, d'un premier dispositif d'évacuation des gaz repéré d'une manière générale par la référence 5 et, dans sa partie supérieure, de deux dispositifs d'évacuation des gaz repérés d'une manière générale par les références 6 et 7. Ces dispositifs d'évacuation des gaz 5, 6 et 7, s'étendent longitudinalement au conteneur 1, les dispositifs d'évacuation des gaz 6 et 7 étant disposés de part et d'autre et à distance du plan médian vertical du conteneur 1.

Les dispositifs d'évacuation des gaz 5, 6 et 7 sont structurés de la même manière et comprennent des parois de séparation 8, 9 et 10 qui délimitent entre les parois d'extrémité 3 et 4 du conteneur 1 et la paroi périphérique 2 de ce dernier, des chambres 11, 12 et 13.

Les parois de séparation 8, 9 et 10 des dispositifs d'évacuation des gaz 5, 6 et 7 comprennent des toiles planes ou tamis 14, 15 et 16, qui laissent passer les gaz et qui sont de préférence formées par un tissu synthétique par exemple en polyester.

Les dispositifs d'évacuation des gaz 8, 9 et 10 comprennent également des moyens d'appui 17, 18 et 19 qui sont disposés respectivement dans les chambres 11, 12 et 13 et fixés à la paroi 2 du conteneur 1, sur lesquels les toiles 14, 15 et 16 prennent appui.

En outre, la paroi d'extrémité 4 du conteneur 1 est munie de passages traversants 20, 21 et 22 qui débouchent respectivement dans les chambres 11, 12 et 13 des dispositifs d'évacuation des gaz 5, 6 et 7 et sur lesquels sont branchées, extérieurement au conteneur 1, des conduites verticales 23, 24 et 25 qui s'étendent vers le bas et qui sont reliées à un collecteur transversal et horizontal 26, ces conduites étant équipées respectivement de vannes 27, 28 et 29.

L'une des extrémités du collecteur 26 est fermée tandis que son autre extrémité est munie d'une vanne 30 bidirectionnelle munie de deux conduites 31 et 32.

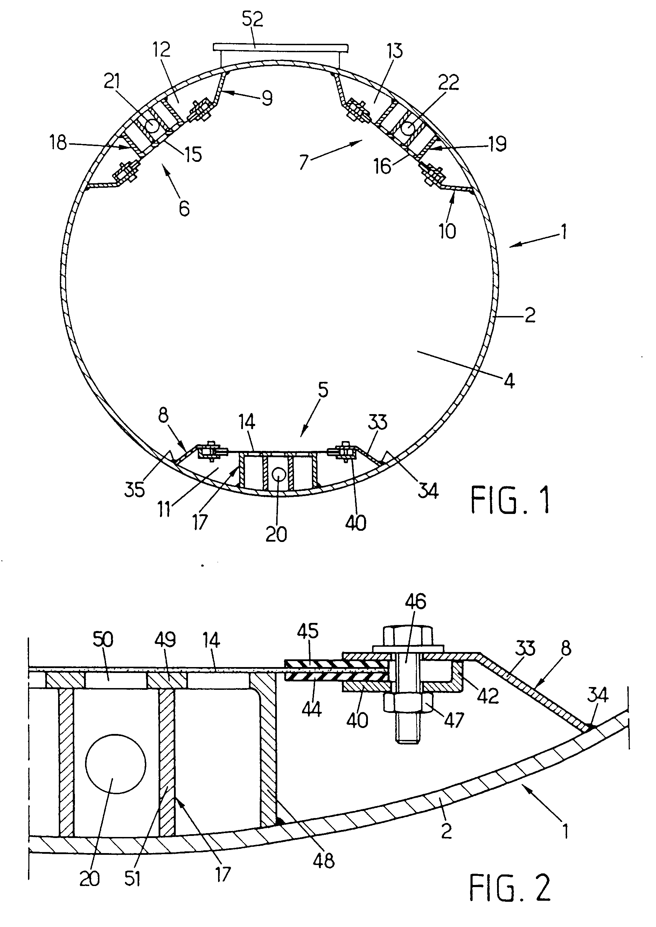

En se reportant notamment à la figure 2, on va maintenant décrire plus précisément quelle est la structure du dispositif d'évacuation des gaz 5, les dispositifs d'évacuation des gaz 6 et 7 ayant une structure correspondante.

Sa paroi de séparation 8 comprend une plaque 33 de section transversale en forme de cuvette dont les bords longitudinaux 34 et 35 sont soudés à la paroi cylindrique 2 du conteneur 1 et dont les bords d'extrémité 36 et 37 sont soudés aux parois d'extrémité 3 et 4 du conteneur 1.

La plaque 33 présente deux ouvertures 38 et 39 rectangulaires qui sont espacées dans le sens longitudinal du conteneur 1 et qui sont fermées respectivement par deux toiles 14 dont les bords sont engagés en-dessous des bords périphériques des passages 38 et 39 de la plaque 33. Les bords des passages 38 et 39 de la plaque 33 sont équipés de contre-plaques 40 et 41 qui s'étendent en-dessous des bords des toiles 14 et qui présentent, à distance des ouvertures, des ailes 42 et 43 venant en appui contre la plaque 33.

En outre, les bords des toiles 14 sont munis, sur leurs deux faces opposées, de joints en caoutchouc collés 44 et 45. Pour pincer les bords des toiles 14 munis des joints, des vis régulièrement réparties 46 traversent la plaque 33 et sont vissées dans des écrous 47 fixés aux contre-plaques 40 et 41, ces vis 46 étant disposées au-delà des bords des toiles 14.

Le dispositif d'évacuation des gaz 8 comprend deux moyens d'appui 17 qui sont respectivement associés aux deux toiles 14. Ces moyens d'appui 17 comprennent des profilés longitudinaux de section en forme de U 48 dont l'âme 49 est située à distance de la paroi 2 du conteneur 1 et dont les bords longitudinaux des branches sont soudés à cette paroi 2. Les toiles 14 sont en appui sur la surface extérieure de l'âme 49 de ces profilés 48, cette âme présentant des perforations 50 pour laisser passer les gaz. En outre, les moyens d'appui 17 comprennent des plaques longitudinales 51 qui sont fixées entre les âmes 49 et la paroi 2 du conteneur 1.

La surface de l'âme 49 de chaque profilé 48 recouvre presque toute la surface de chaque toile 14, jusqu'à faible distance des bords des ouvertures 38 et 39 de la plaque 33.

On voit en outre sur la figure 1 que le conteneur 1 est muni dans sa partie supérieure, entre les dispositifs d'évacuation des gaz 6 et 7, de trous d'homme 52 prévus pour son remplissage. Le conteneur 1 pourrait être équipé, par exemple sur l'une de ses parois d'extrémité, d'autres conduites de branchement extérieurs.

Pour le remplissage du conteneur 1, on peut procéder de la manière suivante.

On effectue une première opération de remplissage du conteneur 1 par, par exemple un matériau pulvérulent à faible densité. Au cours de cette opération, l'air s'évacue au travers des toiles 14, 15 et 16 des dispositifs d'évacuation des gaz 5, 6 et 7, s'écoule dans leurs chambres 11, 12 et 13, s'évacue par les conduites 23, 24 et 25 et le collecteur 26 vers l'extérieur au travers de la vanne 30 et de la conduite 32.

On stoppe l'opération de remplissage et on manoeuvre la vanne 30 de manière à mettre sa conduite 31 en communication avec le collecteur 26. Cette conduite étant branchée sur des moyens d'amenée d'air sous pression, cet air sous pression alimente les chambres 11, 12 et 13 et traverse les toiles 14, 15 et 16 provoquant ainsi leur nettoyage.

On manoeuvre la vanne 30 dans l'autre sens et on recommence une opération de remplisssage.

On repète ces opérations successives plusieurs fois jusqu'à ce que le volume intérieur du conteneur 1 soit convenablement et complètement rempli.

Compte tenu de la disposition des dispositifs d'évacuation des gaz 5, 6 et 7 et de la manière ci-dessus de procéder, il est possible de remplir le conteneur 1 d'une quantité relativement importante d'un matériau pulvérulent à faible densité. En outre, ces dispositifs d'évacuation des gaz 5, 6 et 7 sont particulièrement résistants et sont conçus pour éviter le déchirement des toiles 14, 15 et 16 sous l'action des charges.

La présente invention ne se limite pas à l'exemple ci-dessus décrit, bien des variantes de réalisation sont possibles sans sortir du cadre défini par les revendications annexées.

## Revendications

1. Dispositif d'évacuation des gaz permettant d'équiper un conteneur (1) destiné notamment à recevoir un matériau pulvérulent à faible densité, conteneur dans lequel est prévue au moins une chambre à paroi laissant passer les gaz et reliée à l'extérieur au travers de la paroi du conteneur caractérisé par le fait qu'il comprend une paroi de séparation (8) destinée à être fixée à la paroi périphérique (2) du conteneur de façon à délimiter avec cette paroi périphérique une chambre (11), cette paroi de séparation étant formée au moins en partie par au moins une toile (14) ou tamis laissant passer les gaz, la paroi (2) du conteneur présentant au moins une ouverture (20) mettant en communication ladite chambre avec l'extérieur.

2. Dispositif selon la revendication 1, caractérisé par le fait que ladite paroi de séparation (8) comprend une plaque (33) dont le bord périphérique est fixé à la paroi du conteneur (1) et qui présente au moins une ouverture (38) fermée par ledite toile (14), des moyens de fixation étant prévus pour fixer le bord périphérique de cette toile à ladite plaque.

3. Dispositif selon la revendication 2, caractérisé par le fait que lesdits moyens de fixation comprennent une contre-plaque (40) fixée de manière amovible sur le bord de ladite plaque (33), entre lesquelles le bord de la toile est pincé.

4. Dispositif selon la revendication 3, caractérisé par le fait qu'il comprend des joints (44, 45) en matériau élastique interposés entre le bord de la toile (14) et respectivement ladite plaque (33) et ladite contre-plaque (40).

5. Dispositif selon l'une des revendications 3 et 4, caractérisé par le fait que la contre-plaque (40) est fixée sur ladite plaque (33) par des vis (46) qui sont disposées au-delà du bord de la toile (14).

6. Dispositif selon l'une quelconque des revendications précédentes, caractérisé par le fait qu'il comprend des moyens d'appui (17) disposés dans ladite chambre et sur lesquels repose ladite toile.

7. Dispositif selon la revendication 6, caractérisé par le fait que lesdits moyens d'appui comprennent une plaque rigide (49) perforée sur laquelle prend appui la toile, cette plaque étant portée par des éléments de soutien (48, 51) fixés a la paroi (2) du conteneur.

8. Conteneur longitudinal destiné notamment à recevoir un matériau pulvérulent à faible densité, caractérisé par le fait qu'il est équipé de dispositifs d'évacuation des gaz (5, 6) selon l'une quelconque des revendications 1 à 7, prévus longitudinalement respectivement dans sa partie inférieure et dans sa partie supérieure.

9. Conteneur selon la revendication 8, caractérisé par le fait que lesdites chambres (11, 12) des dispositifs précités sont reliées à un collecteur extérieur (26) connecté à des moyens d'amenée et/ou d'aspiration de gaz.

## Claims

1. Device for evacuation of gases allowing the fitting out of a container (1) intended in particular to receive a powdery material of low density, in which container is provided at least one chamber with wall allowing the gases to pass and connected to the outside through the wall of the container, characterised in that it comprises a separation wall (8) designed to be attached to the peripheral wall (2) of the container so as to delimit with this peripheral wall a chamber (11), this separation wall being formed at least in part by at least one cloth (14) or sieve allowing the gases to pass, the wall (2) of the container having at least one aperture (20) placing said chamber in communication with the outside.

2. Device according to Claim 1, characterised in that said separation wall (8) comprises a plate (33) the peripheral edge of which is attached to the wall of the container (1) and which has at least one aperture (38) closed by said cloth (14), attachment means being provided in order to attach the peripheral edge of this cloth to said plate.

3. Device according to Claim 2, characterised in that said attachment means comprise a backing plate (40) attached in detachable manner to the edge of said plate (33), between which the edge of the cloth is gripped.

4. Device according to Claim 3, characterised in that it comprises seals (44, 45) in resilient material interposed between the edge of the cloth (14) and respectively said plate (33) and said backing plate (40).

5. Device according to one of Claims 3 and 4, characterised in that the backing plate (40) is attached to said plate (33) by bolts (46) which are disposed beyond the edge of the cloth (14).

6. Device according to any of the preceding claims, characterised in that it comprises support means (17) disposed in said chamber and on which rests said cloth.

7. Device according to Claim 6, characterised in that said support means comprise a perforated rigid plate (49) on which rests the cloth, this plate being borne by supporting members (48, 51) attached to the wall (2) of the container.

8. Longitudinal container intended in particular to receive a powdery material of low density, characterised in that it is fitted out with devices for evacuation of gases (5, 6) according to any of Claims 1 to 7, provided longitudinally in its lower part and in its upper part respectively.

9. Container according to Claim 8, characterised in that said chambers (11, 12) of the above-mentioned devices are connected to a external manifold (26) connected to means for admission and/or for suction of gases.

## Patentansprüche

1. Vorrichtung zum Entnehmen von Gas, welche es ermöglicht, einen Behälter damit auszurüsten, der insbesondere dazu bestimmt ist, ein staubförmiges Material geringer Dichte aufzunehmen, einen Behälter, in welchem mindestens eine Kammer mit einer für das Gas durchlässigen Wand vorgesehen und durch die Wand des Behälters hindurch mit der Außenseite verbunden ist, dadurch gekennzeichnet, daß sie eine Trennwand (8) umfaßt, die dazu bestimmt ist, derart an der Umfangswand (2) des Behälters befestigt zu werden, daß sie mit dieser Umfangswand eine Kammer (11) begrenzt, wobei diese Trennwand zumindest teilweise durch mindestens ein für das Gas durchlässiges Gewebe (14) oder Sieb gebildet ist und wobei die Wand (2) des Behälters mindestens eine Öffnung (20) aufweist, welche die Kammer mit der Außenseite verbindet.

2. Vorrichtung nach Anspruch 1, dadurch gekennzeichnet, daß die besagte Trennwand (8) eine Platte (33) umfaßt, deren Umfangsrand an der Wand des Behälters (1) befestigt ist und die mindestens eine Öffnung (38) aufweist, welche durch das genannte Gewebe (14) verschlossen ist, wobei Befestigungsmittel vorgesehen sind, um den Umfangsrand dieses Gewebes an der genannten Platte zu befestigen.

3. Vorrichtung nach Anspruch 2, dadurch gekennzeichnet, daß die genannten Befestigungsmittel eine Gegenplatte (40) umfassen, welche in lösbarer Weise an dem Rand der genannten Platte (33) befestigt ist, wobei zwischen ihnen der Rand des Gewebes eingeklemmt ist.

4. Vorrichtung nach Anspruch 3, dadurch gekennzeichnet, daß sie Dichtungen (44, 45) aus elastischem Material umfaßt, welche zwischen dem Rand des Gewebes (14) und jeweils der Platte (33) bzw. der Gegenplatte (40) eingefügt sind.

5. Vorrichtung nach Anspruch 3 oder 4, dadurch gekennzeichnet, daß die Gegenplatte (40) auf der besagten Platte (33) mittels Schrauben (46) befestigt ist, welche jenseits des Randes des Gewebes (14) angeordnet sind.

6. Vorrichtung nach einem der vorangehenden Ansprüche, dadurch gekennzeichnet, daß sie Abstützmittel (17) umfaßt, welche in der besagten Kammer angeordnet sind und auf denen das besagte Gewebe ruht.

7. Vorrichtung nach Anspruch 6, dadurch gekennzeichnet, daß die Abstützmittel eine starre, gelochte Platte (49) umfassen, auf der sich das Gewebe abstützt, wobei diese Platte von Halteelementen (48, 51) getragen wird, die an der Wand (2) des Behälters befestigt sind.

8. Länglicher Behälter (oder Tank), der insbesondere zur Aufnahme eines staubförmigen Materials geringer Dichte bestimmt ist, dadurch gekennzeichnet, daß er mit Vorrichtungen (5, 6) zum Entnehmen von Gas nach einem der Ansprüche 1 bis 7 versehen ist, welche in Längsrichtung jeweils in seinem unteren und in seinem oberen Teil vorgesehen sind.

9. Behälter nach Anspruch 8, dadurch gekennzeichnet, daß die besagten Kammern (11, 12) der vorerwähnten Vorrichtungen mit einem äußeren Sammelgefäß (26) verbunden sind, welches mit Mitteln zum Zuführen und/oder zum Absaugen von Gas verbunden ist.
